# EUROPEAN PATENT APPLICATION

(11) **EP 4 765 314 A1**
(43) Date of publication of application: **24.06.2026**
(21) Application number: 25827177.4
(22) Date of filing: 30.05.2025
(51) Int. Cl.: H01M 10/42, H01M 50/383, H01M 50/317, H01M 50/249, A62C 3/16, A62C 99/00, A62C 35/02, A62D 1/00, A62D 1/06

(54) **BATTERY PACK AND VEHICLE INCLUDING SAME**

(30) Priority: 27.06.2024 KR 20240084842
(71) Applicant: LG Energy Solution, Ltd., Seoul 07335 (KR)
(72) Inventor: LEE, Joo-Hyoung, Daejeon 34122 (KR); JUNG, Hye-Mi, Daejeon 34122 (KR)
(74) Representative: Plasseraud IP
(86) International application number: PCT/KR2025/007490
(87) International publication number: WO 2026/005314

(57) **Abstract**

The present disclosure relates to a battery pack including: a plurality of battery cells; a pack case configured to store the plurality of battery cells and having a venting device provided on one side to discharge venting gas generated from the battery cell to the outside thereof; and an extinguishing member provided in the pack case and configured to provide an extinguishing agent to the venting device.

## Description

### TECHNICAL FIELD

The present disclosure relates to a battery pack and, more specifically, to a battery pack with enhanced safety and a vehicle including the same.

This application is based on and claims priority from Korean Patent Application No. 10-2024-0084842, filed on June 27, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack.

A common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of modularizing the same, have been manufactured.

However, if a thermal event such as thermal runaway occurs inside the battery pack, gas may be emitted from the battery cells contained therein, and this gas may include flames or the like. In addition, when gas is generally emitted from the battery cell, electrode plate particles or active material particles may be discharged from the battery cell to the outside in a state of being heated to a high temperature, and the high-temperature particles may appear in the form of sparks.

Conventional battery packs, when an abnormal situation occurs in a specific battery cell or battery module, often discharge high-temperature gas or the like to the outside of the pack case through a venting unit provided in the pack case. In this case, if sparks are exposed to the outside of the pack case together with the gas, it may react with oxygen outside the battery pack, causing a flame or fire to develop outside the battery pack. Furthermore, if a flame or fire occurs outside a specific battery pack, the fire may spread to other adjacent battery packs or devices equipped with the battery pack, causing a bigger problem.

Therefore, there is a need for a technology to prevent sparks or flames from being exposed to the outside of the battery pack through the venting unit, thereby suppressing the occurrence or spread of flames or fires outside the battery pack.

### DISCLOSURE

### Technical Problem

The present disclosure is designed to solve the problems of the related art, and therefore the present disclosure is directed to providing a battery pack capable of ensuring safety and reliability in an abnormal situation of a battery cell or battery module such as thermal runaway in the battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to store the plurality of battery cells and having a venting device provided on one side to discharge venting gas generated from the battery cell to an outside thereof; and an extinguishing member provided in the pack case and configured to provide an extinguishing agent to the venting device.

The extinguishing member may be configured to absorb heat and alter its material properties.

The extinguishing member may be configured to surround an outer perimeter of the venting device.

The extinguishing member may be provided on an inner surface of the pack case.

The pack case may include multiple beams in which an empty space is formed, and the extinguishing member may be provided in an empty space formed in at least one of the multiple beams.

An extinguishing agent generated from the extinguishing member may be configured to move from the empty space toward the venting device.

The pack case may have a discharge hole formed to be in communication with the empty space and configured such that an extinguishing agent generated from the extinguishing member may be discharged therethrough.

The discharge hole may be formed in at least one of the multiple beams.

The discharge hole may be formed in a beam where the venting device is provided.

The discharge hole may be configured to discharge the extinguishing agent across the venting device.

The discharge hole may be configured to discharge the extinguishing agent along a height direction of the venting device.

A plurality of discharge holes may be disposed along a widthwise direction of the venting device.

The battery pack according to an embodiment of present disclosure may further include a cover member configured to cover the discharge hole and open the discharge hole by melting by heat.

In another aspect of the present disclosure, there is provided a vehicle including a battery pack according to the present disclosure.

### Advantageous Effects

According to one aspect of the present disclosure, sparks generated in an abnormal situation of a battery cell can be prevented from being exposed to the outside of the pack case by an extinguishing agent such as carbon dioxide or the like generated through the sublimation of an extinguishing member, thereby suppressing the occurrence of a flame outside the pack case. Therefore, the safety and reliability of the battery pack can be guaranteed.

In addition, according to one aspect of the present disclosure, the extinguishing member can be configured to absorb surrounding heat as it sublimates, thereby lowering the temperature around the venting device V. Accordingly, the extinguishment of sparks heading toward the venting device V can be induced. Therefore, the discharge of sparks to the outside of the pack case 200 can be initially blocked.

In addition, according to one aspect of the present disclosure, when an event such as thermal runaway of the battery pack occurs, the flame or fire can be extinguished by the extinguishing agent. Therefore, it is possible to more effectively suppress the occurrence of a chain reaction between the battery cells.

Furthermore, according to one aspect of the present disclosure, the thermal propagation prevention performance between packs can be effectively secured by suppressing flame development outside the battery pack.

Therefore, events due to thermal runaway, such as fire or explosion, in a battery pack including a plurality of battery modules or a device equipped with them can be prevented or delayed.

In particular, in the case of an electric vehicle, it is possible to obtain sufficient time for the occupants to escape or drive by suppressing or delaying thermal runaway between the battery cells or battery modules.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a perspective view of a battery module included in a battery pack according to an embodiment of the present disclosure.
FIG. 4 is a drawing illustrating a state where an extinguishing agent is provided to a venting device included in a battery pack according to an embodiment of the present disclosure.
FIGS. 5 and 6 are interior perspective views of a battery pack according to an embodiment of the present disclosure, which illustrate an embodiment in which an extinguishing agent is provided to a venting device.
FIG. 7 is a cross-sectional perspective view of a battery pack according to another embodiment of the present disclosure, which may illustrates a cross-section taken along, for example, line I - I' in FIG. 1.
FIG. 8 is a cross-sectional view of a battery pack when viewed from above according to another embodiment of the present disclosure, which may be a cross-sectional view taken along, for example, line II - II' in FIG. 1.
FIG. 9 is a drawing illustrating an embodiment in which an extinguishing agent is provided to a venting device in a battery pack according to another embodiment of the present disclosure.
FIG. 10 is a drawing illustrating a discharge hole in a battery pack according to another embodiment of the present disclosure.
FIG. 11 is a drawing illustrating a discharge hole in a battery pack according to another embodiment of the present disclosure.
FIG. 12 is a drawing illustrating a discharge hole in a battery pack according to another embodiment of the present disclosure.
FIG. 13 is a drawing illustrating a discharge hole in a battery pack according to another embodiment of the present disclosure.
FIG. 14 is a drawing illustrating an embodiment in which an extinguishing agent is provided to a venting device in a battery pack according to another embodiment of the present disclosure.
FIG. 15 is a drawing illustrating a discharge hole in a battery pack according to another embodiment of the present disclosure.
FIG. 16 is a drawing illustrating an embodiment in which an extinguishing agent is provided from a discharge hole when a thermal event occurs in a battery pack according to another embodiment of the present disclosure.
FIG. 17 is a drawing illustrating a cover member in a battery pack according to another embodiment of the present disclosure.
FIG. 18 is a cross-sectional view of a battery pack when viewed from below according to another embodiment of the present disclosure.
FIG. 19 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

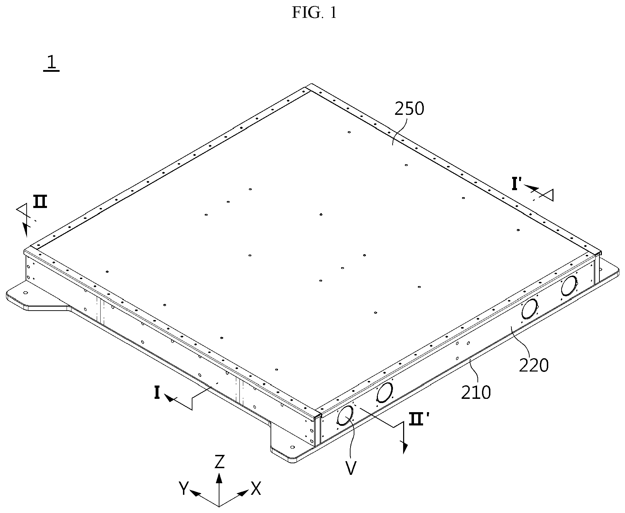

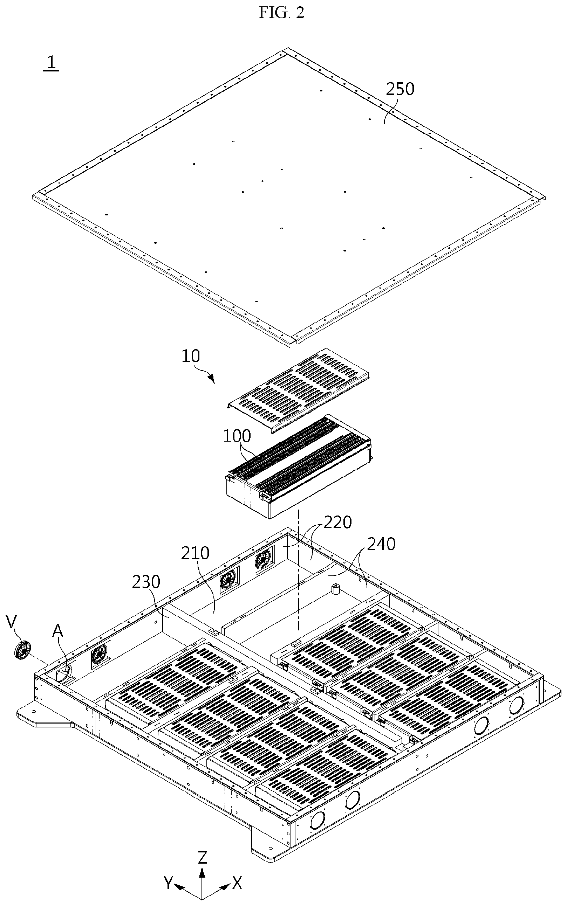

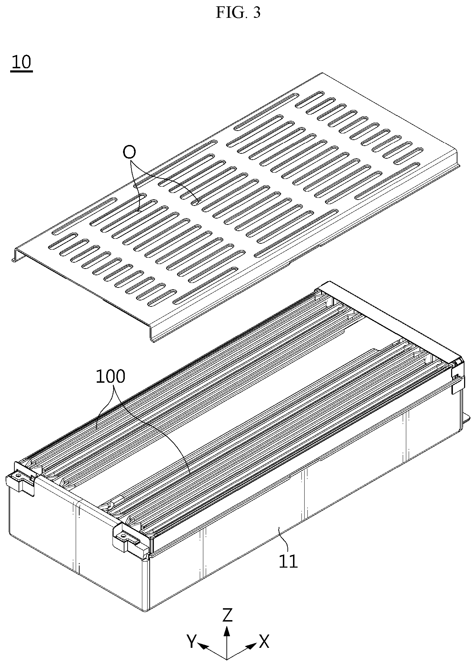

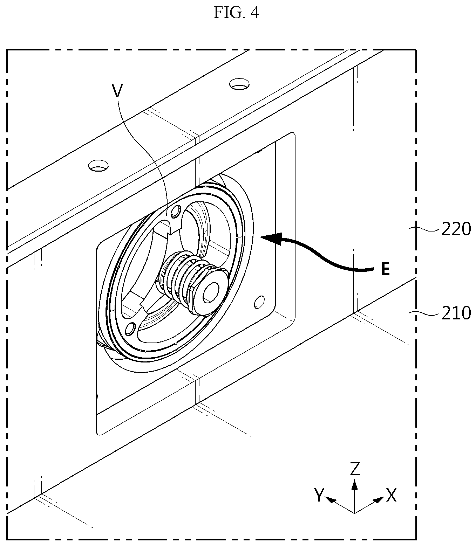

FIG. 1 is an overall perspective view of a battery pack according to an embodiment of the present disclosure, and FIG. 2 is an exploded perspective view of a battery pack according to an embodiment of the present disclosure. FIG. 3 is a perspective view of a battery module included in a battery pack according to an embodiment of the present disclosure. In addition, FIG. 4 is a drawing illustrating a state where an extinguishing agent is provided to a venting device included in a battery pack according to an embodiment of the present disclosure.

Referring to FIGS. 1 to 4, a battery pack 1 according to an embodiment of the present disclosure may include a battery cell 100 and a pack case 200.

First, referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends to the outside of the cell case, thereby functioning as an electrode terminal. In this case, the plurality of battery cells 100 may be electrically connected to each other.

The plurality of battery cells 100 may be stacked in at least one direction. For example, as shown in FIG. 2, the plurality of battery cells 100 may be disposed side by side in the front-back direction (X-axis direction) while standing in the vertical direction (Z-axis direction).

According to an embodiment of the present disclosure, the battery cell 100 may be a pouch-type secondary battery. However, the present disclosure is not limited to a specific type or form of the battery cell 100, and various battery cells 100 known at the time of filing of the present disclosure may be applied to configure the battery pack 1 of the present disclosure. For example, a cylindrical or prismatic secondary battery may also be applied to the battery cell 100.

The plurality of battery cells 100 may be modularized into one or more battery modules 10. That is, the battery pack 1 according to the present disclosure may include multiple battery modules 10, and a plurality of battery cells 100 included in the battery pack 1 may be divided and included in the multiple battery modules 10. In this case, the plurality of battery cells 100 included in the battery module 10 may be electrically connected to each other.

Referring to FIG. 3, the battery module 10 included in the battery pack 1 according to the present disclosure may further include a module case 11. The module case 11 may be configured to have an empty space formed therein and store at least some of the plurality of battery cells 100 in the inner space. In particular, the module case 11 may be configured to store the battery cells 100. That is, the module case 11 may be a boundary that groups the plurality of battery cells 100 into several battery modules 10 and physically confines the inner space of each battery module 10.

In addition, although not shown in the drawing, the battery module 10 may include a bus-bar assembly and/or a module terminal electrically connected to the plurality of battery cells 100 stored therein.

The battery module 10 may include a venting hole H. The venting hole H may be configured so that gas generated from the battery cell 100 stored inside the module case 11 is discharged to the outside of the module case 11.

Specifically, the venting hole H may be provided in the module case 11 and configured to enable directional venting toward a specific direction. For example, as shown in FIG. 2 and FIG. 4, the venting hole H may be provided in the upper portion of the module case 11. According to this implemented configuration, the venting gas and/or spark may be guided to be discharged to the upper portion of the battery module.

The pack case 200 may be configured to store a plurality of battery cells 100. The pack case 200 may be configured in the form of a box including a plurality of frames. The pack case 200 may be made of a material capable of securing mechanical strength, such as metal, for example, steel or SUS, or plastic, or may include such a material in order to safely protect the battery cells 100 stored therein.

The pack case 200 may include a venting device V on one side. The venting device V may be provided on the side of the pack case 200. The venting device V may be configured to discharge gas generated from the battery cell 100 to the outside of the pack case 200. The venting device V may be configured to be opened by the pressure of the venting gas when the internal pressure of the pack case 200 increases due to the venting gas generated therein, thereby discharging the venting gas to the outside of the pack case 200.

The venting device V may be configured to be opened and closed depending on the internal pressure of the pack case 200. The venting device V may be configured in the form of a hole. Alternatively, the venting device V may have a venting valve or may be implemented as such a venting valve. The pack case 200 may have a mounting portion A formed therein. The mounting portion A may be configured such that the venting device V may be installed therein. If the venting device V is provided with a venting valve or is implemented in the form of such a venting valve, the venting valve may be configured to be opened when the internal pressure of the pack case 200 increases, thereby discharging venting gas to the outside of the pack case 200.

Meanwhile, the present disclosure is not limited to a specific type or form of the venting device V, and various venting devices V known at the time of filing of the present disclosure may be applied to configure the battery pack 1 of the present disclosure.

A plurality of venting devices V may be provided. The venting device V may be provided in one or more beams among a plurality of beams. One venting device V may be provided in each of two or more beams, or two or more venting devices V may be provided in each beam.

Meanwhile, the number of installations or locations of the venting devices V described in the embodiment in FIG. 2 or the like are merely examples, and may be changed to various other values or locations.

Referring to FIG. 4, the extinguishing member 300 may be configured to provide an extinguishing agent E. Specifically, the extinguishing member 300 may be configured to provide the extinguishing agent E to the venting device V. The extinguishing member 300 may be configured to emit the extinguishing agent E toward the venting device V. The extinguishing member 300 may be configured to spray the extinguishing agent E to the venting device V. Alternatively, the extinguishing agent E provided from the extinguishing member 300 may be configured to move toward the venting device V.

The extinguishing member 300 may be provided in the pack case 200. A description regarding the location of the extinguishing member 300 will be described later.

The extinguishing agent E may be a gas. For example, the extinguishing agent E may be carbon dioxide or include carbon dioxide. Carbon dioxide, as an extinguishing agent, may act to suppress or extinguish flames. Therefore, according to this implement configuration of the present disclosure, when an event such as thermal runaway occurs, carbon dioxide may actively respond to the venting gas or flames.

According to the above-mentioned configuration of the present disclosure, since the extinguishing member 300 configured to provide the extinguishing agent E to the venting device V is included, the oxygen concentration around the venting device V may be reduced. Accordingly, the occurrence of flames inside or outside the battery pack 1 may be suppressed. In addition, even if a flame or fire occurs, the flame or fire may be extinguished by the extinguishing agent E. As a result, the safety and reliability of the battery pack 1 may be secured.

Furthermore, the venting gas generated from the battery cell 100 may include high-temperature particles in the form of sparks caused by active material particles or electrolyte. In particular, sparks or flames having a strong tendency to move straight may be discharged from the battery cell 100 and may move to the venting device V. In this case, if the sparks or flames are discharged to the outside of the pack case 200 through the venting device V, there is a risk of fire or explosion.

However, according to the above-mentioned configuration of the present disclosure, the extinguishing agent E may be configured to filter such sparks and/or flames. The extinguishing agent E may block the discharge of sparks or flames heading toward the venting device V to the outside of the pack case 200. Accordingly, it is possible to suppress the occurrence of flames outside the battery pack 1.

In addition, according to the above-mentioned configuration of the present disclosure, the temperature of high-temperature venting gas or active material particles may be lowered by the extinguishing member 300 absorbing heat of the venting gas or the like. In addition, the extinguishing member 300 may be configured to lower the temperature around the venting device V during the process of generating the extinguishing agent E. Accordingly, the extinguishing of sparks heading toward the venting device V may be induced. As a result, the discharge of sparks to the outside of the pack case 200 may be initially blocked.

The extinguishing member 300 may be configured to absorb heat and alter its material properties. For example, the extinguishing member 300 may have a material that generates an extinguishing agent E through a change in state, such as sublimation, at room temperature or in an environment above a certain temperature, or through a chemical reaction process, or may be made of such a material. The extinguishing member 300 may be in a solid state at room temperature, and may absorb heat at a certain temperature or more to change into a gas.

The extinguishing member 300 may be configured to generate carbon dioxide (CO2). The extinguishing member 300 may have a material that generates carbon dioxide under specific conditions. The extinguishing member 300 may have a material capable of generating carbon dioxide through a combustion reaction due to heat or flames. As described above, carbon dioxide generated from the extinguishing member 300 may be provided to the venting device V.

In addition, the extinguishing member 300 may have a material that generates water or water vapor under specific circumstances. Furthermore, the extinguishing member 300 may have a material that generates carbon dioxide and water through a thermal decomposition reaction.

In this case, water or water vapor generated by the extinguishing member 300 may act as an extinguishing agent, thereby further improving the flame/spark discharge suppression effect or the temperature lowering effect of the venting device V or the like.

For example, the extinguishing member 300 may have naphthalene. The naphthalene included in the extinguishing member 300 may generate carbon dioxide and water through a combustion reaction. In particular, when a flame or the like, generated by the intensification of an event such as thermal runaway in the battery module 10, flows into the venting device V, the flame or the like may cause a combustion reaction on the naphthalene. At this time, the naphthalene may react with oxygen to generate carbon dioxide and water.

As another example, the extinguishing member 300 may have potassium bicarbonate or sodium bicarbonate. Typically, potassium bicarbonate may generate carbon dioxide and water (water vapor) through the following thermal decomposition reaction.

2KHCO3 → K2CO3 + H2O + CO2 - Q

That is, when potassium bicarbonate is included in the extinguishing member 300, potassium bicarbonate may absorb heat (Q), and generate water vapor (H2O) and carbon dioxide (CO2) together with K2CO3.

According to this implemented configuration of the present disclosure, sparks or fires may be more rapidly and reliably suppressed by carbon dioxide and/or water generated by the extinguishing member 300 during thermal runaway. In this case, the temperature of venting gas or high-temperature materials may be lowered by water or the like. In addition, water vapor or the like may also have the effect of hindering the straight movement of flame or particles, thereby suppressing the discharge of flame or particles to the outside.

The extinguishing member 300 may be formed solely of a material such as naphthalene or potassium bicarbonate, or may further include other materials or components in addition to such a material. For example, the extinguishing member 300 may be configured in a compressed form of naphthalene or potassium bicarbonate powder. Alternatively, the extinguishing member 300 may be configured in a form in which the material of generating carbon dioxide and/or water vapor, as described above, is supported by a separate support member. For example, the extinguishing member 300 may be configured in a form in which potassium bicarbonate or naphthalene is supported by a mesh-shaped support member made of a metal or polymer material.

Hereinafter, the location of the extinguishing member 300 will be described in detail.

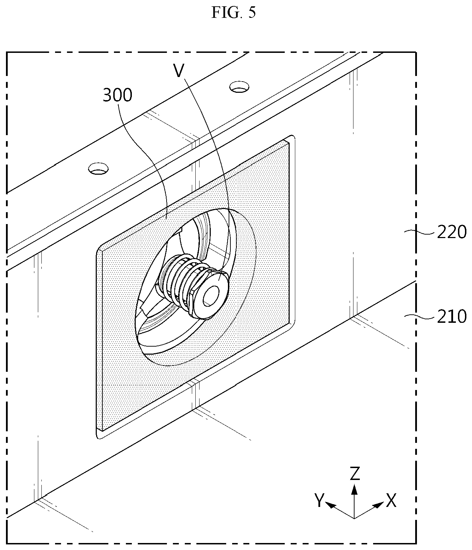

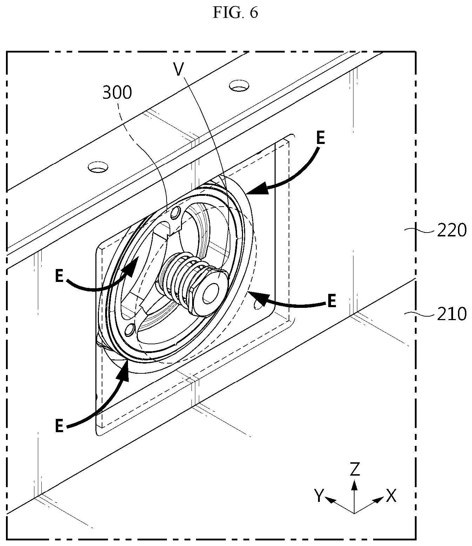

FIGS. 5 and 6 are interior perspective views of a battery pack according to an embodiment of the present disclosure, which illustrate an embodiment in which an extinguishing agent is provided to a venting device.

As an example in which the extinguishing agent E is provided to the venting device V, the extinguishing member 300 may be provided on one side of the pack case 200 equipped with the venting device V, like the example illustrated in FIG. 5. The extinguishing member 300 may be configured to be attached to one side of the pack case 200. Alternatively, the extinguishing member 300 may be applied to one side of the pack case 200.

In particular, the extinguishing member 300 may be configured to surround the outer perimeter of the venting device V. The extinguishing member 300 may be configured to surround the outer side of the mounting portion A. As shown in FIG. 5, the extinguishing member 300 may be configured, in a solid state, to surround the outer perimeter of the venting device V, and as shown in FIG. 6, it may absorb heat and sublimate to generate a gaseous extinguishing agent E.

The extinguishing member 300 may be configured in a plate shape. For example, as shown in FIG. 5 or the like, the extinguishing member 300 may be configured in a square plate shape in which an empty space is formed.

According to the above-mentioned configuration of the present disclosure, the extinguishing member 300 may absorb heat around the venting device V during the sublimation process to lower the temperature. As a result, the extinguishing of the sparks heading toward the venting device V may be induced.

In addition, according to the above-mentioned configuration of the present disclosure, since the extinguishing agent E is sprayed toward the venting device V, the discharge of sparks or flames, heading toward the venting device V, to the outside of the pack case 200 may be blocked. Accordingly, the occurrence of flames may be suppressed outside the battery pack 1.

The extinguishing member 300 may be provided on the inner surface of the pack case 200. Specifically, sparks and/or flames generated from the battery cell 100 may move to the venting device V. That is, a venting path may be formed between a plurality of battery cells 100 and the venting device V so that sparks and/or flames flow therethrough. In this case, the extinguishing member 300 may be provided to cross the venting path, thereby suppressing movement of sparks or the like.

According to the above-mentioned configuration of the present disclosure, since sparks and/or flames emitted from the battery cell 100 are preemptively blocked before reaching the venting device V, the discharge of the sparks to the outside may be prevented, thereby more effectively suppressing the occurrence of flames outside the pack case 200.

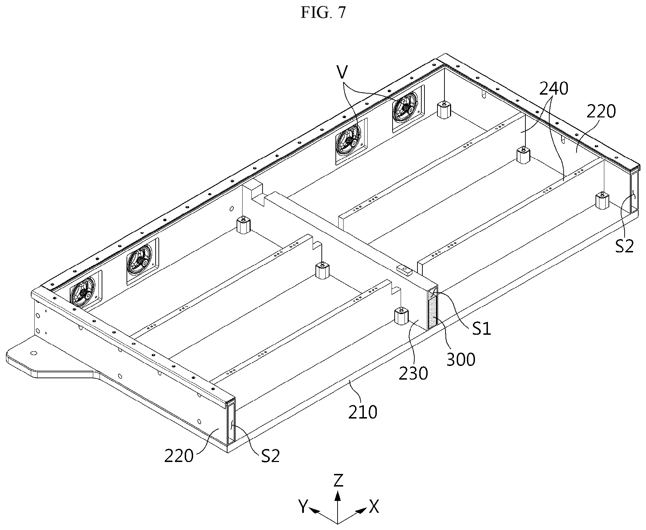

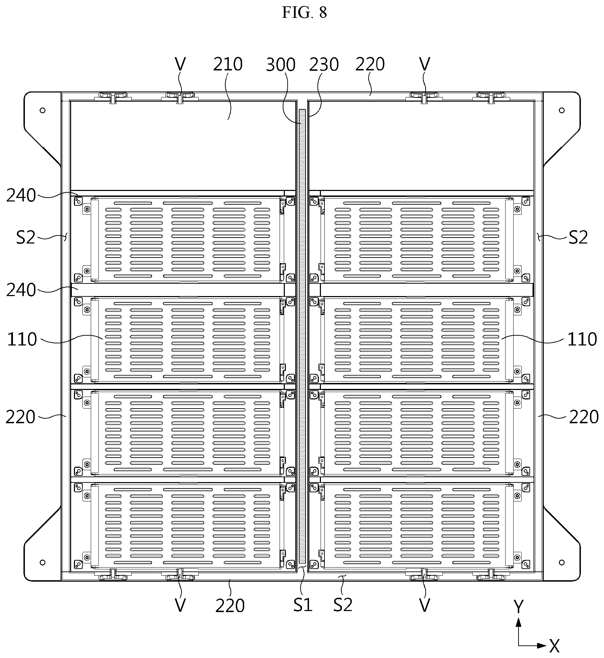

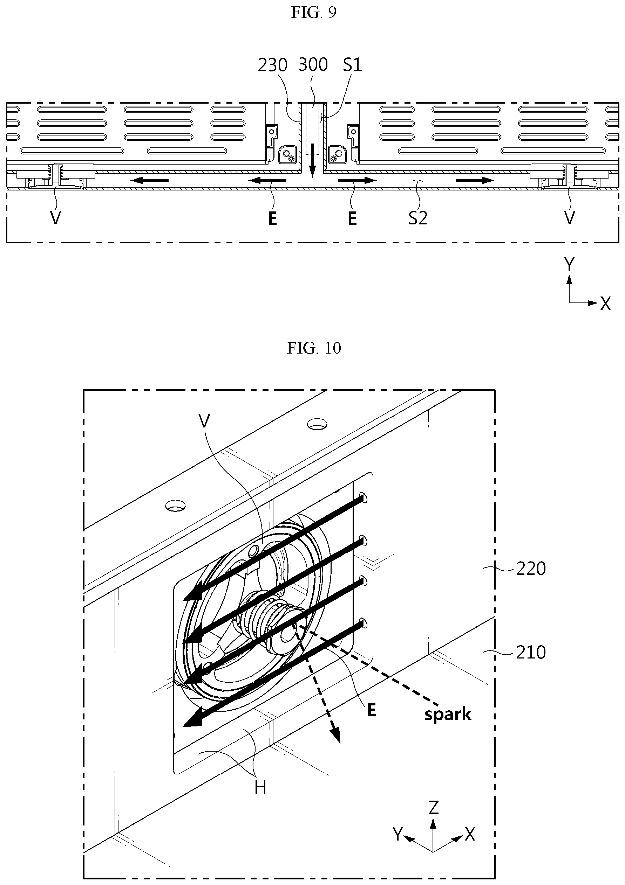

FIG. 7 is a cross-sectional perspective view of a battery pack according to another embodiment of the present disclosure, which may illustrates a cross-section taken along, for example, line I - I' in FIG. 1. FIG. 8 is a cross-sectional view of a battery pack when viewed from above according to another embodiment of the present disclosure, which may be a cross-sectional view taken along, for example, line II - II' in FIG. 1. In addition, FIG. 9 is a drawing illustrating an embodiment in which an extinguishing agent is provided to a venting device in a battery pack according to another embodiment of the present disclosure.

Referring to FIG. 2, FIG. 7, and FIG. 8, the pack case 200 may have a plurality of frames and a plurality of beams. More specifically, the pack case 200 may include a base frame 210 and a plurality of side beams 220.

The base frame 210 may be configured so that a plurality of battery modules 10 are seated thereon. The base frame 210 may form the bottom surface of the pack case 200 and may be configured in the form of a square plate. In addition, the base frame 210 may have a flat upper surface so that the battery module 10 may be stably seated thereon.

The plurality of side beams 220 may extend upward from respective edges of the base frame 210. The plurality of side beams 220 may be configured to surround the plurality of battery modules 10. More specifically, the plurality of side beams 220 may include a right wall located at the +X-direction end of the base frame 210, a rear wall located at the +Y-direction end, a left wall located at the -X-direction end, and a front wall located at the -Y-direction end, respectively, to form the sides of the pack case 200.

In addition, a venting device V may be provided on at least some of the side beams 220. For example, as disclosed in the embodiment illustrated in FIG. 8, two venting devices V may be provided on each of the front and rear walls of the side beams 220.

The pack case 200 may further include a center beam 230 and a cross-beam 240. The center beam 230 and the cross-beam 240 may be provided to partition a plurality of battery modules 10. For example, the center beam 230 may be configured as a partition extending in the front-back direction and may be interposed between battery modules 10 that are adjacently disposed in the left-right direction. In addition, the cross-beam 240 may be configured as a partition extending in the left-right direction and may be interposed between battery modules 10 that are adjacently disposed in the front-back direction. For example, as illustrated in FIG. 8, the plurality of battery modules 10 may be partitioned and arranged in four rows and two columns by the center beam 230 and the cross-beams 240.

According to this implemented configuration, heat or flame may be prevented from directly spreading between the battery modules 10 whose storage spaces are separated by the center beam 230 and the cross-beams 240.

The pack case 200 may further include a cover frame 250. The cover frame 250 may be configured to cover the top of the plurality of battery modules 10. The cover frame 250 may be provided to form the upper side of the pack case 200. The cover frame 250 may be coupled to the side beam 220. Alternatively, the cover frame 250 may be provided integrally with the side beam 220.

Referring to FIGS. 7 and 8, at least some of the multiple beams of the pack case 200 may have an empty space formed therein. For example, a first empty space S1 may be formed inside the center beam 230. In addition, at least some of the multiple side beams 220 may have a second empty space S2 formed therein. As disclosed in the embodiment illustrated in FIG. 8, the second empty space S2 may be formed in all four walls of the side beams 220. In this case, the first empty space S1 and the second empty space S2 may be configured to communicate with each other.

As another embodiment in which the extinguishing agent E is provided to the venting device V, as disclosed in the embodiment illustrated in FIGS. 7 and 8, the extinguishing member 300 may be provided in an empty space formed in at least one of the multiple beams. For example, the extinguishing member 300 may be provided in at least one of the first empty space S1 and the second empty space S2. The extinguishing member 300 may be configured to extend along the extension direction of the side beam 220 and/or the center beam 230. The extinguishing member 300 may be configured in a plate shape.

In particular, the extinguishing member 300 may be provided in the first empty space S1 inside the center beam 230. According to the above-mentioned configuration, since more heat may be applied to the first empty space S1 that is in direct contact with the battery cell 100, the extinguishing member 300 may absorb the heat and quickly sublimate to generate an extinguishing agent E.

The extinguishing agent E generated from the extinguishing member 300 may be configured to move from the empty space to the venting device V.

For example, in a case where the extinguishing member 300 is provided in the second empty space S2, the extinguishing agent E may move directly from the second empty space S2 to the venting device V. The venting device V may be provided to be in communication with the second empty space S2 formed in the side beam 220. As a result, the extinguishing agent E of the second empty space S2 may move through the venting device V.

Alternatively, as disclosed in the embodiment illustrated in FIG. 8, in a case where the extinguishing member 300 is provided in the first empty space S1 of the center beam 230, the extinguishing agent E may move from the first empty space S1 to the second empty space S2 and then move to the venting device V provided on the side beam 220 (see the bold arrows in FIG. 9).

According to the above-mentioned configuration of the present disclosure, during the process in which the extinguishing member 300 inside the center beam 230 sublimates, the heat of venting gas or the like may be absorbed, thereby lowering the temperature of the high-temperature venting gas or active material particles inside the pack case 200. Therefore, the temperature inside the battery pack 1 may be lowered, and heat accumulation may be prevented, so that thermal runaway of the battery pack 1 may be suppressed.

In addition, according to the above-mentioned configuration of the present disclosure, the oxygen concentration around the venting device V may be reduced by the extinguishing agent E moving toward the venting device V. Accordingly, the occurrence of a flame inside or outside the battery pack 1 may be suppressed.

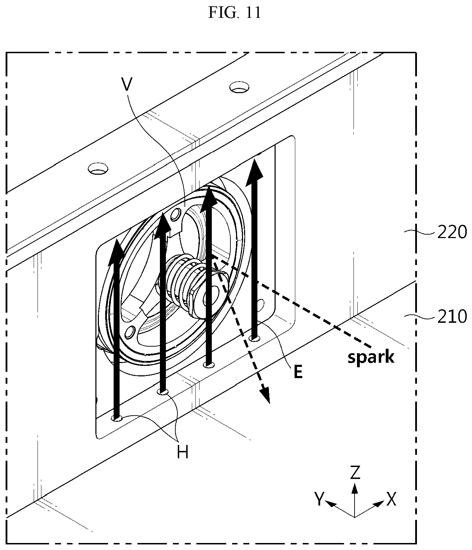

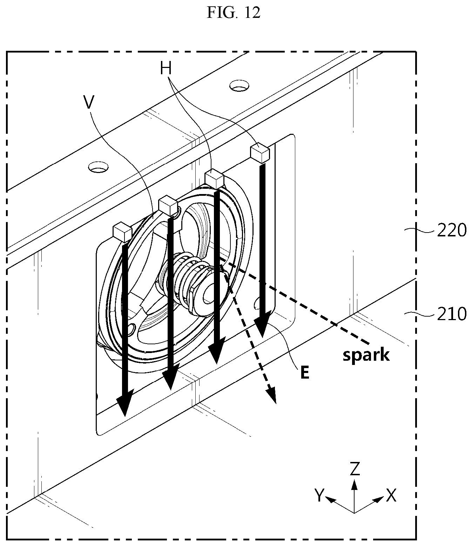

FIG. 10 is a drawing illustrating a discharge hole in a battery pack according to another embodiment of the present disclosure. In addition, FIGS. 11 and 12 are drawings illustrating a discharge hole in a battery pack according to another embodiment of the present disclosure.

Referring to FIG. 10 to FIG. 12, a process in which an extinguishing agent E generated from an extinguishing member 300 is discharged toward a venting device V will be described in detail.

The first empty space S1 and the second empty space S2 may be configured to directly or indirectly communicate with the venting device V. More specifically, the pack case 200 may have a discharge hole H. The discharge hole H may be provided in at least one of the multiple beams. In particular, the discharge hole H may be provided in a beam where a venting device V is provided. For example, the venting device V may be provided on the side beam 220, and a discharge hole H may be provided in the side beam 220. The discharge hole H may be configured to communicate with the first empty space S1 and the second empty space S2.

The discharge hole H may be configured to discharge an extinguishing agent E generated from the extinguishing member 300. In particular, the discharge hole H may be configured to discharge the extinguishing agent E toward the venting device V.

The discharge hole H may be configured in the form of a hole passing through the pack case 200. Alternatively, the discharge hole H may be configured in the form of a nozzle protruding outward from the pack case 200.

According to the above-mentioned configuration of the present disclosure, the extinguishing agent E is directly discharged toward the venting device V, so that the oxygen concentration around the venting device V may be reduced. As a result, the occurrence of a flame inside or outside the battery pack 1 may be suppressed. In addition, even if a flame or fire occurs, the flame or fire may be extinguished by the extinguishing agent E. Therefore, the safety and reliability of the battery pack 1 may be secured.

The discharge hole H may be configured such that the extinguishing agent E is discharged across the venting device V. The extinguishing agent E discharged from the discharge hole H may perform an air curtain function. That is, the movement of sparks or flames between the inside and outside of the venting device V may be blocked by the strong pressure of the extinguishing agent E discharged from the discharge hole H.

The discharge hole H may be provided in the outer periphery of the venting device V. The discharge hole H may be provided in the outer side of the mounting portion A. In addition, the discharge hole H may be provided on the inner surface of the pack case 200. The side beam 220 may be configured such that its inner surface is recessed inward, and in this case, the discharge hole H may be provided in the recessed portion of the side beam 220.

According to the above-mentioned configuration of the present disclosure, the flow direction of sparks may be bent by the strong pressure of the extinguishing agent E before the sparks are discharged to the venting device V. In addition, in this process, sparks and the like heading toward the venting device V together with the venting gas may be prevented from being discharged to the outside. Accordingly, the occurrence of a flame outside the battery pack 1 may be suppressed more effectively.

The discharge hole H may be configured to discharge the extinguishing agent E along the widthwise direction of the venting device V. The discharge hole H may be provided on at least one of the left and right sides of the venting device V. For example, the discharge holes H may be provided on the left and right sides of the venting device V so as to be staggered relative to each other. Alternatively, as disclosed in the embodiment illustrated in FIG. 10, the discharge hole H may be provided on the right side of the venting device V.

Alternatively, the discharge hole H may be configured to discharge the extinguishing agent E along the height direction of the venting device V. The discharge hole H may be provided on at least one of the upper and lower sides of the venting device V. For example, the discharge holes H may be provided on the upper and lower sides of the venting device V so as to be staggered relative to each other. Alternatively, as disclosed in the embodiment illustrated in FIG. 11, the discharge hole H may be provided at the bottom of the venting device V.

In particular, as disclosed in the embodiment illustrated in FIG. 12, the discharge hole H may be provided at the top of the venting device V. Accordingly, the extinguishing agent E may be strongly emitted in the direction of gravity to block sparks or the like heading toward the venting device V (see the dotted arrow in FIG. 12).

Specifically, the venting gas or sparks discharged from the battery cell 100 are in a high-temperature state and may have a strong tendency to flow upward. Therefore, as disclosed in the above embodiment, in a case where the discharge hole H is provided at the top of the venting device V, the sparks with a strong tendency to move straight may be guided to collide with the discharged extinguishing agent E, thereby more reliably suppressing the discharge of the sparks to the outside.

A plurality of discharge holes H may be provided. The plurality of discharge holes H may be disposed along the widthwise direction of the venting device V. That is, the plurality of discharge holes H may be disposed along the extension direction of the side beam 220. According to the above-mentioned configuration of the present disclosure, since the extinguishing agent E may cover the entire area of the venting device V, the sparks heading toward the venting device V may be more reliably blocked.

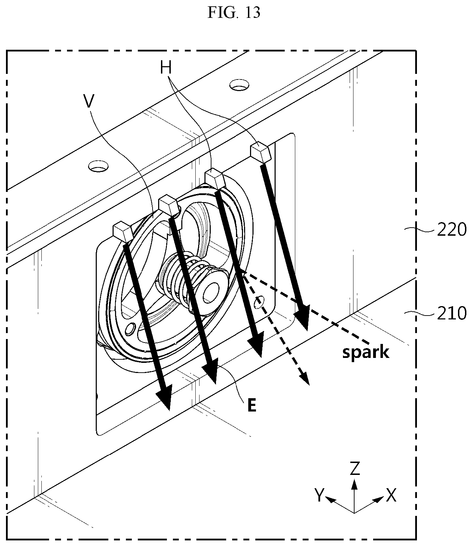

FIG. 13 is a drawing illustrating a discharge hole in a battery pack according to another embodiment of the present disclosure.

Referring to FIG. 13, the discharge hole H may be configured to discharge an extinguishing agent E toward the inside of the pack case 200. For example, a nozzle having the discharge hole H may be provided to be inclined toward the inside of the pack case 200.

According to this implemented configuration of the present disclosure, when an extinguishing agent E such as carbon dioxide or water is generated from the extinguishing member 300, the extinguishing agent E may be sprayed toward the inside of the pack case 200, as indicated by the arrows in FIG. 13. That is, the extinguishing agent E may be directly sprayed to face sparks or flames heading toward the venting device V. Therefore, the extinguishing effect by the extinguishing agent E may be further improved.

In addition, according to the above-mentioned configuration, the venting gas or the like may move toward the venting device V through the opposite side where the discharge hole H is provided. Accordingly, the venting gas may be smoothly discharged to the outside of the pack case 200 through the venting device V. Therefore, since the internal pressure of the pack case 200 is reduced, thermal runaway may be prevented inside the battery pack 1.

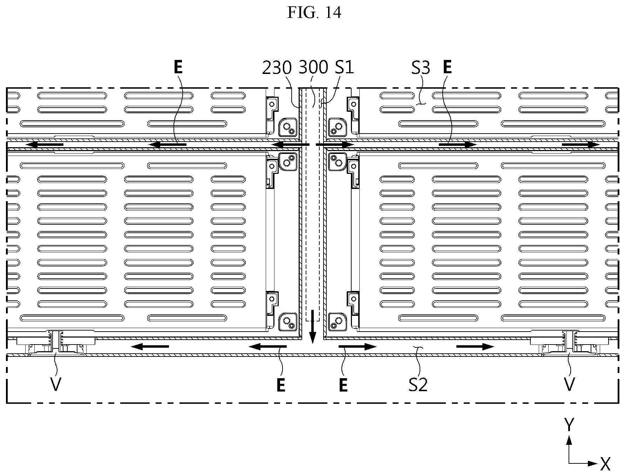

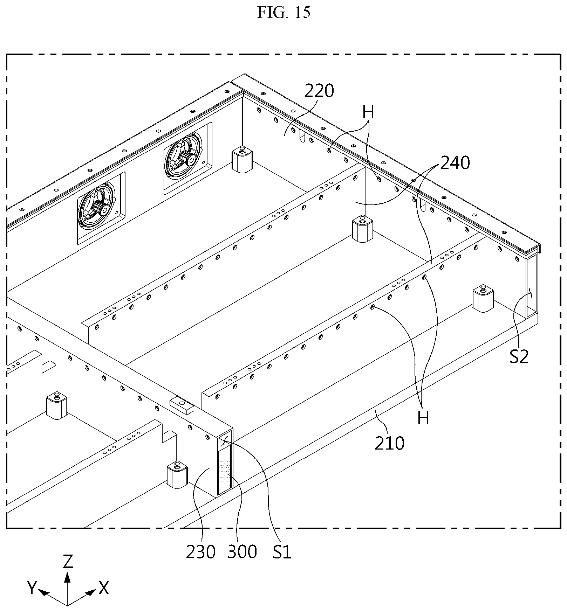

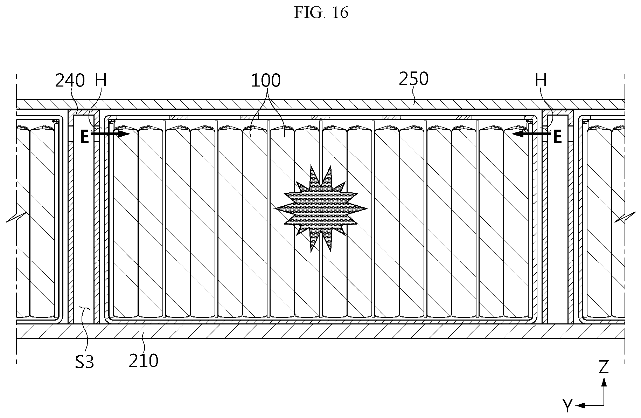

FIG. 14 is a drawing illustrating an embodiment in which an extinguishing agent is provided to a venting device in a battery pack according to another embodiment of the present disclosure. FIG. 15 is a drawing illustrating a discharge hole in a battery pack according to another embodiment of the present disclosure. In addition, FIG. 16 is a drawing illustrating an embodiment in which an extinguishing agent is provided from a discharge hole when a thermal event occurs in a battery pack according to another embodiment of the present disclosure.

Referring to FIG. 14, a third empty space S3 may be formed inside the cross-beam 240. This third empty space S3 may be configured to be in direct communication with the first empty space S1. In addition, the third empty space S3 may be configured to be in indirect communication with the second empty space S2. In this case, although not shown in the drawing, an extinguishing member 300 may also be provided in the third empty space S3.

In a case where the extinguishing member 300 is provided in the first empty space S1 of the center beam 230, an extinguishing agent E may be generated from the extinguishing member 300 provided in the first empty space S1 and may move from the first empty space S1 to the second empty space S2 and/or the third empty space S3 (see the bold arrows in FIG. 14).

In addition, referring to FIG. 15 and FIG. 16, the discharge hole H may be provided in at least one of the cross-beam 240, the center beam 230, and the side beam 220. The discharge hole H may be configured to be in communication with the first empty space S1, the second empty space S2, and the third empty space S3.

Accordingly, when a thermal event occurs in a battery module 10, an extinguishing agent E may be discharged toward the battery module 10 through a discharge hole H provided in at least one of the first empty space S1, the second empty space S2, and the third empty space S3 (see the bold arrows in FIG. 16).

According to the above-mentioned configuration of the present disclosure, the extinguishing agent E discharged from the discharge holes H formed in a plurality of beams surrounding the battery module 10 where a thermal event occurs may be directly sprayed toward the battery module 10, thereby controlling the thermal event of the battery module 10. Therefore, heat such as venting gas or flame generated from the battery cell 100 may be quickly cooled, thereby suppressing thermal runaway of the battery module 10.

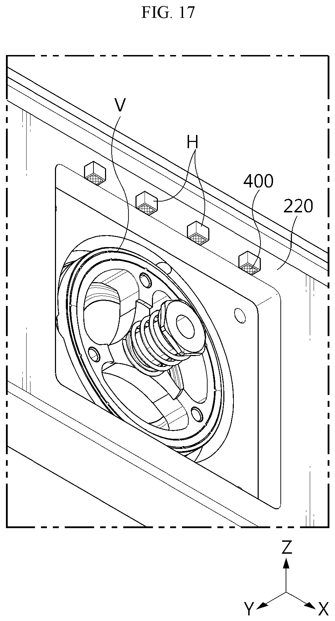

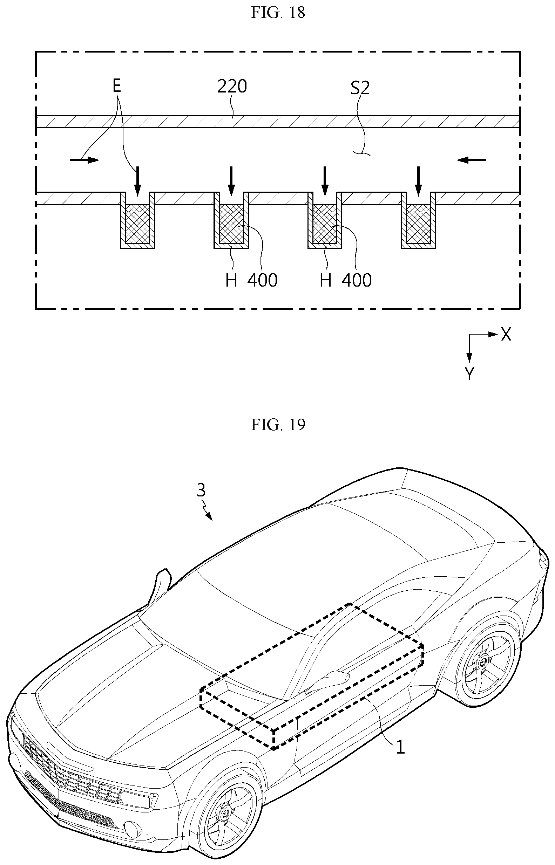

FIG. 17 is a drawing illustrating a cover member in a battery pack according to another embodiment of the present disclosure, and FIG. 18 is a cross-sectional view of a battery pack when viewed from below according to another embodiment of the present disclosure.

Referring to FIG. 17 and FIG. 18, a battery pack 1 according to another embodiment of the present disclosure may further include a cover member 400. The cover member 400 may be configured to cover the discharge hole H. In addition, the cover member 400 may be configured to open the discharge hole H when thermal runaway occurs.

For example, the cover member 400 may be configured as a phase change material (PCM). A phase change material refers to a material capable of accumulating or releasing a large amount of heat energy (latent heat) without causing a change in temperature during a process of changing from a solid to a liquid, from a liquid to a gas, or vice versa at a specific temperature (phase change temperature).

The cover member 400 may absorb heat from the battery cell 100 by utilizing an endothermic reaction. For example, the cover member 400 may be a material that is provided in a solid state and switches into a liquid or gaseous state when heat is transferred from the battery cell 100.

According to the above-mentioned configuration of the present disclosure, in normal times, the cover member 400 may block the discharge hole H, thereby preventing venting gas or the like from flowing into the second empty space S2 of the side beam 220 through the discharge hole H. In addition, when a thermal event occurs in the battery pack 1, the cover member 400 may open the discharge hole H, thereby allowing the extinguishing agent E to be discharged through the discharge hole H. As a result, according to the above-mentioned configuration of the present disclosure, sparks heading toward the venting device V may be blocked, and the oxygen concentration around the venting device V may be reduced, thereby suppressing the occurrence of flames or fire.

FIG. 19 is a schematic perspective view of a vehicle including a battery pack according to an embodiment of the present disclosure.

Referring to FIG. 19, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may run on the power supplied from the battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells;
a pack case configured to store the plurality of battery cells and having a venting device provided on one side to discharge venting gas generated from the battery cell to an outside thereof; and
an extinguishing member provided in the pack case and configured to provide an extinguishing agent to the venting device.

2. The battery pack according to claim 1,
wherein the extinguishing member is configured to absorb heat and alter its material properties.

3. The battery pack according to claim 1,
wherein the extinguishing member is configured to surround an outer perimeter of the venting device.

4. The battery pack according to claim 1,
wherein the extinguishing member is provided on an inner surface of the pack case.

5. The battery pack according to claim 1,
wherein the pack case comprises multiple beams in which an empty space is formed, and
wherein the extinguishing member is provided in an empty space formed in at least one of the multiple beams.

6. The battery pack according to claim 5,
wherein an extinguishing agent generated from the extinguishing member is configured to move from the empty space toward the venting device.

7. The battery pack according to claim 5,
wherein the pack case has
a discharge hole formed to be in communication with the empty space and configured such that an extinguishing agent generated from the extinguishing member is discharged therethrough.

8. The battery pack according to claim 7,
wherein the discharge hole is formed in at least one of the multiple beams.

9. The battery pack according to claim 7,
wherein the discharge hole is formed in a beam where the venting device is provided.

10. The battery pack according to claim 8,
wherein the discharge hole is configured to discharge the extinguishing agent across the venting device.

11. The battery pack according to claim 8,
wherein the discharge hole is configured to discharge the extinguishing agent along a height direction of the venting device.

12. The battery pack according to claim 10,
wherein a plurality of discharge holes are disposed along a widthwise direction of the venting device.

13. The battery pack according to claim 7,
further comprising a cover member configured to cover the discharge hole and open the discharge hole by melting by heat.

14. A vehicle comprising a battery pack according to any one of claims 1 to 13.
